# EUROPEAN PATENT APPLICATION

(11) **EP 4 807 605 A1**
(43) Date of publication of application: **16.09.2026**
(21) Application number: 25163433.3
(22) Date of filing: 13.03.2025
(51) Int. Cl.: G06F 21/62

(54) **SECURE QUERY PROCESSING AND DATA ANALYTICS USING MULTIPARTY COMPUTATION**

(71) Applicant: Robert Bosch GmbH, 70442 Stuttgart (DE)
(72) Inventor: Bor Bor Yalame, Mohammadhossein, 64289 Darmstadt (DE); Boesch, Christoph, 72138 Kirchentellinsfurt (DE)

(57) **Abstract**

A computer-implemented method for generating a multiparty computation code of a query, comprising identifying at least one first operation in the query; assigning a first multiparty computation primitive to the at least one first operation based on an optimization of a total computational cost of executing the multiparty computation code to be generated, wherein the first multiparty computation primitive is chosen to be either an arithmetic secret sharing primitive or a Boolean secret sharing primitive or a Boolean garbled circuit primitive or one of one or more further multiparty computation primitives; and generating, using a multiparty computation framework, the multiparty computation code of the query based on assigning the first multiparty computation primitive.

## Description

### Background

Several methods, concepts and techniques relevant to SQL and multiparty computation (MPC) have been developed in the past.

SQL (structured query language) is an established language used for managing and querying relational databases, widely adopted across industries for data manipulation and retrieval. However, traditional SQL processes operate on clear text data creating significant security risks when handling sensitive or confidential information, especially under privacy regulations like e.g. GDPR.

Multiparty computation (MPC) is a cryptographic protocol enabling multiple parties to jointly compute a function over their private inputs while keeping those inputs secure. This protocol is particularly valuable in privacy critical applications. However, integrating SQL and MPC for privacy-preserving computations remains complex.

Many general-purpose MPC frameworks, such as those operating under semi-honest and malicious settings, provide a foundation for secure computation. Despite their flexibility, these frameworks generally require manual coding for each specific use case, including SQL queries.

For example, Carbyne Stack is an open-source cloud stack for building scalable MPC applications. As another example, MP-SPDZ is a versatile framework supporting various MPC protocols. While both Carbyne Stack and MP-SPDZ offer powerful frameworks for MPC the process of manually translating e.g. SQL queries to MPC protocols introduces complexity and restricts their usability for non-experts. In fact, these frameworks require manual intervention to convert SQL queries into MPC protocols. For example, developers must manually adapt each SQL query for secure computation, which can be complex and error-prone.

In today's digital landscape, organizations rely heavily on e.g. SQL databases to manage and process vast amounts of data. However, safeguarding sensitive data, especially under regulations like GDPR, presents a critical challenge. Processing such data in plaintext can expose it to unauthorized access, leading to privacy breaches and non-compliance with legal regulations. Additionally, certain datasets cannot be processed unless encrypted to meet privacy standards. Given the increasing interconnection between digital and conventional technical systems, protecting data during computation is also important to ensure technical integrity of such interconnected technical systems.

Secure multiparty computation (MPC) offers a potential solution by enabling computations on secret-shared data where no party has access to the full dataset. Despite its advantages, existing solutions suffer from several limitations:
- Existing solutions require custom code to be manually generated for each (SQL) query, making the process complex and prone to errors. Such a manual intervention is particularly challenging for developers without cryptographic expertise.
- There is currently no automated system that converts e.g. SQL queries into MPC compatible code, which creates a significant barrier for developers who are not familiar with MPC protocols.
- Most solutions are closely tied to specific MPC protocols, restricting their usability across different frameworks and reducing their flexibility for diverse use cases.
- Preparing data for MPC - including data extraction, conversion, and/or optimization - is often cumbersome and inefficient, leading to slower computations and higher resource consumption.

### Disclosure

A first general aspect pertains to a computer-implemented method for generating a multiparty computation code of a query. The method comprises identifying at least one first operation in the query. The method further comprises assigning a first multiparty computation primitive to the at least one first operation based on an optimization of a total computational cost of executing the multiparty computation code to be generated, wherein the first multiparty computation primitive is chosen to be either an arithmetic secret sharing primitive or a Boolean secret sharing primitive or a Boolean garbled circuit primitive or one of one or more further multiparty computation primitives. The method further comprises generating, using a multiparty computation framework, the multiparty computation code of the query based on assigning the first multiparty computation primitive.

A second general aspect pertains to a computer system configured to execute the method for generating a multiparty computation code of a query according to the first general aspect (or an embodiment thereof).

A third general aspect pertains to a computer program or signal, wherein the computer program or signal is configured to execute the method for generating a multiparty computation code of a query according to the first general aspect (or an embodiment thereof).

A fourth general aspect pertains to a computer-readable medium that stores and/or contains the computer program or the signal of the third general aspect (or an embodiment thereof).

Conventionally, e.g. SQL queries had to be manually transformed into MPC protocols by experts. This process was highly complex and time consuming requiring deep cryptographic knowledge. Developers without expertise in MPC faced steep learning curves and had to rely on external experts increasing the risk of inefficiencies and errors. The manual nature of the process limited the adoption of MPC in real-world applications, as organizations found it challenging to integrate MPC into their existing SQL-based workflows.

Thanks to the method of the first general aspect (or an embodiment thereof) generation (and execution) of multiparty computation (MPC) programs based on e.g. SQL queries are efficiently automated enabling secure, privacy-preserving data processing for distributed environments. For example, SQL structures can be efficiently converted into MPC protocols with minimal user input facilitating secure computation on secret-shared data without exposing sensitive information. The disclosed method significantly lowers the barrier for e.g. SQL developers to use MPC without requiring cryptographic expertise. Furthermore, it ensures that developers can leverage MPC technology to process sensitive data securely, without needing to write custom MPC code for every query. This automation makes the process seamless, scalable, and accessible across diverse use cases, providing organizations with an effective tool for ensuring data privacy while adhering to regulatory requirements.

Advantageously, a hybrid MPC approach is used that, after converting a query into e.g. a multiparty computation intermediate representation (MPC-IR), can assign different (sub-)operations to different MPC primitives (e.g., arithmetic secret sharing primitive, Boolean garbled circuit primitive, homomorphic encryption primitive, etc.), thereby increasing the efficiency of the multiparty computation code. In particular, in scenarios where certain parts of a query are better suited for arithmetic secret sharing, while others are more efficient under, e.g., a Boolean garbled-circuit scheme, the hybrid MPC assignment as disclosed in embodiments of this method can automatically employ different protocols within the same query execution.

In some embodiments of the method of the first aspect (or an embodiment thereof), additional abstraction layers such as an MPC intermediate representation (MPC IR) and/or e.g. an SQL intermediate representation (SQL IR) are introduced allowing e.g. SQL queries to be automatically translated into MPC protocols without manual intervention. Thanks to the method and, in particular, drawing on hybrid protocol assignment techniques, a compiler can strategically select which parts of the SQL IR map to arithmetic MPC operations and which parts map to Boolean or even homomorphic approaches, all behind a unified MPC IR interface. This approach supports cross protocol compatibility and optimizations across various MPC frameworks.

The method has many advantages. In particular, the method introduces significant advancements over existing SQL-MPC frameworks by addressing the key limitations of prior solutions. While prior frameworks provided the foundational ability to perform secure computations, they lacked e.g. critical automation and usability features. Below are the primary improvements that our system offers:
- Automated and streamlined workflow: Existing MPC frameworks require manual intervention for converting e.g. SQL queries into MPC protocols. Our system automates the entire process - e.g. from parsing the SQL query, extracting the relevant data, preparing the data for MPC, to generating the necessary MPC code -e.g. all without manual input. This automation drastically reduces complexity, potential for human error and the need for cryptographic expertise making secure query computation accessible to a wider range of developers.
- Protocol-agnostic intermediate representations (SQL-IR and/or MPC-IR): two intermediate representations, SQL IR and MPC IR, may be introduced to decouple e.g. the high-level SQL syntax from the underlying MPC protocols. The SQL-IR provides a structured and programmatic way to manipulate SQL queries while the MPC-IR is flexible and independent of specific MPC protocols. This protocol-agnostic design ensures that e.g. the same SQL query can be used across various MPC frameworks (e.g., MP-SPDZ, SCALE-MAMBA), thereby greatly improving cross-platform compatibility and reusability.
- Support for hybrid MPC: as to protocol assignments, decisions can be made at a fine-grained IR level whether a given operation (e.g., addition, multiplication, comparison) should be executed under arithmetic secret sharing, a Boolean garbled circuit, or another cryptographic approach. The compiler uses a cost-based optimization strategy to choose the best protocol or combination thereof (hybrid) for each part of the query.
- Optimized data handling and computation: by minimizing the number of MPC operations required and optimizing data flows, the system ensures efficient and cost-effective execution, even for large datasets. For example, sorting has been shown to enhance the efficiency of multiparty computation (MPC) operations, particularly in the context of SQL or SQL-like queries involving GROUP BY clauses. The benefits of sorting in MPC and the ways in which it can improve efficiency: The process of sorting data prior to executing GROUP BY operations can result in a reduction in the complexity of the grouping process. Once the data is sorted, grouping can be done in a single pass through the data. Furthermore, aggregation functions such as SUM, AVG, MIN and/or MAX can be computed more efficiently on sorted data (in a single pass), as related data points are contiguous. Otherwise, the algorithm needs to scan the entire dataset (may require multiple passes) to identify and group related records. Furthermore, for some aggregation functions, sorting allows for early termination of the computation once the desired result is found. Furthermore, sorting can enable more effective parallel processing of data as independent groups can be processed in parallel without conflicts.
- Enhanced security and compliance: it is ensured that all computations are carried out on encrypted or secret-shared data, thereby protecting sensitive information throughout the entire process. This enhanced security is critical for compliance with e.g. data protection regulations, such as GDPR, and for ensuring the privacy of sensitive business data during computations. It is also critical for the technical integrity of a (conventional) technical system interconnected with one or more digital systems.
- Modular and extensible design: The method is designed to be modular, allowing for easy extensions and adaptations to new protocols or frameworks. The flexibility provided by the MPC-IR layer allows developers to build, modify and enhance MPC protocols in a modular fashion, with the ability to change specific components of the protocol independently. This modularity ensures that the system remains future-proof and adaptable to evolving security needs and computational models.

Furthermore, example benefits of SQL-IR and MPC-IR are:
- Abstraction: By abstracting away the specifics of e.g. the SQL syntax and MPC operations, the intermediate representations offer a more sophisticated and programmatic way to manipulate queries and generate MPC code.
- Modularity: The method allows for the construction and modification of MPC protocols in a modular fashion, enabling developers to alter or optimize specific components independently.
- Optimization: Both the SQL-IR and MPC-IR enable various transformations and optimizations before the generation of the final MPC code, ensuring that the protocol is efficient and scalable.

Hence, the method's ability to automate SQL-to-MPC transformation, its protocol-agnostic design, and particularly its hybrid MPC capabilities represent a major leap forward in making secure MPC-SQL more accessible, efficient and scalable for real-world applications.

### Short description of the figures

**Fig. 1** schematically illustrates embodiments of a method for generating a multiparty computation code of a query.
**Fig. 2** schematically illustrates embodiments of a sub-method for optimization of a total computational cost of executing the multiparty computation code to be generated.
**Fig. 3** shows an example three-layer architecture for the process SQL to MPC.
**Fig. 4** shows an example block diagram of a workflow for secure query execution, highlighting hybrid MPC in the MPC-IR stage.
**Fig. 5** shows an example block diagram of a communication system for autonomous vehicles performing secure private set intersections and SQL queries.

### Detailed description

Method 100 is directed to generating a multiparty computation (MPC) code of a query. For example, in an automated process a high-level SQL query is transformed into a securely executed Multi-Party Computation (MPC) program. Importantly, method 100 is designed to optimize the resulting code, thereby increasing the efficiency of executing the code.

There is disclosed a computer-implemented method 100 for generating a multiparty computation code of a query.

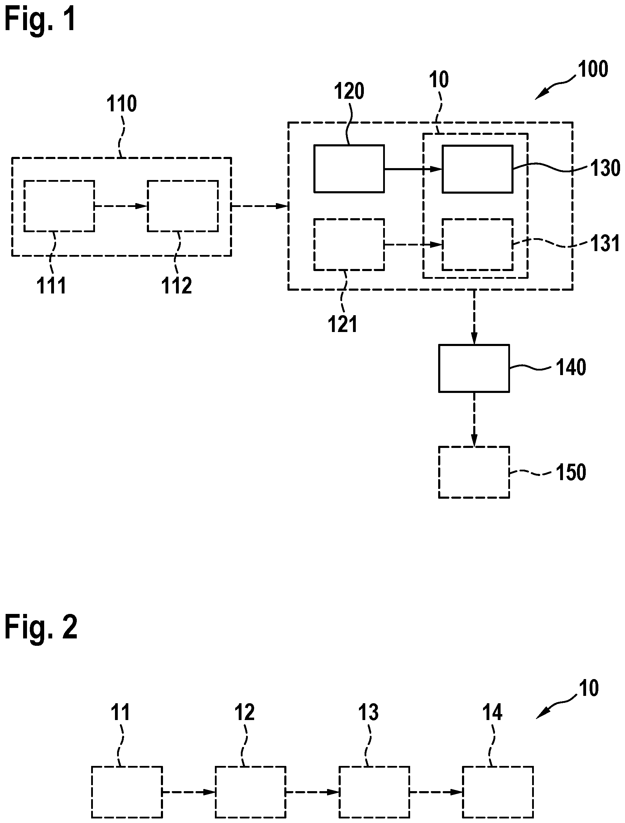

Method 100 comprises, as schematically illustrated in **Fig. 1****,** identifying 120 at least one first operation in the query. For example, operations in the query may comprise an addition operator, a multiplication operator and/or a comparison operator. The query may be an indication to receive a response from one or more databases comprising data. In particular, the query may be a database query such as e.g. an SQL query, wherein SQL stands for Structured Query Language. The response may be based on at least one part of the data. In particular, the response may be a computation result based on the at least one part of the data. The computation leading to the computation result may comprise one or more operations and, in particular, the first operation (and/or also the second operation introduced below).

Method 100 further comprises, as schematically illustrated in **Fig. 1****,** assigning 130 a first multiparty computation primitive to the at least one first operation based on an optimization 10 of a total computational cost of executing the multiparty computation code to be generated 140, wherein the first multiparty computation primitive is chosen to be either an arithmetic secret sharing primitive or a Boolean secret sharing primitive or a Boolean garbled circuit primitive or one of one or more further multiparty computation primitives (different than arithmetic secret sharing primitives or a Boolean secret sharing primitive or Boolean garbled circuit primitives). The method may comprise assigning a multiparty computation primitive to each of the operations (comprising the at least one first operation and the at least one second operation introduced below) based on the optimization 10 of the total computational cost of executing the multiparty computation code to be generated 140, wherein each of the multiparty computation primitives is chosen to be either an arithmetic secret sharing primitive or a Boolean secret sharing primitive or a Boolean garbled circuit primitive or one of one or more further multiparty computation primitives. For example, method 100 may comprise a choice per operation between an arithmetic secret sharing primitive or a Boolean secret sharing primitive or a Boolean garbled circuit primitive or one of one or more further multiparty computation primitives (different than arithmetic secret sharing primitives or a Boolean secret sharing primitive or Boolean garbled circuit primitives).

In embodiments, method 100 may comprise a choice per operation (just) between an arithmetic secret sharing primitive, a Boolean secret sharing primitive and a Boolean garbled circuit primitive. In embodiments, method 100 may comprise a choice per operation (just) between an arithmetic secret sharing primitive and a Boolean garbled circuit primitive. In embodiments, method 100 may comprise a choice per operation (just) between an arithmetic secret sharing primitive and a Boolean secret sharing primitive. In embodiments, method 100 may comprise a choice per operation (just) between a Boolean secret sharing primitive and a Boolean garbled circuit primitive. In other words, in those cases, one or more further multiparty computation primitives (different than arithmetic secret sharing primitives or a Boolean secret sharing primitive or Boolean garbled circuit primitives) may not be relevant.

Example multiparty computation primitives are explained below. An example arithmetic secret sharing primitive is Additive Secret Sharing or Shamir's Secret Sharing. An example Boolean garbled circuit primitive is Yao or Half-gate.

Method 100 further comprises, as schematically illustrated in **Fig. 1****,** generating 140, using a multiparty computation framework, the multiparty computation code of the query based on assigning 130 the first multiparty computation primitive. For example, the multiparty computation framework may be one of MP-SPDZ, FRESCO or Sharemind. In other words, in the generated 140 multiparty computation code the at least one first operation is implemented using the first multiparty computation primitive. Assigning a first multiparty computation primitive to the at least one first operation based on an optimization 10 of a total computational cost of executing the multiparty computation code to be generated 140, wherein the first multiparty computation primitive is chosen to be either an arithmetic secret sharing primitive or a Boolean garbled circuit primitive or one of one or more further multiparty computation primitives, may comprise assigning either an arithmetic secret sharing primitive or a Boolean garbled circuit primitive or one of one or more further multiparty computation primitives to the at least one first operation. In other words, choosing between such alternatives may be part of method 100.

The method may comprise generating the multiparty computation code of the query based on assigning the multiparty computation primitives (one for each of the operations). The optimization of the total computational cost of executing the multiparty computation code to be generated 140 may be such that assigning a multiparty computation primitive to each of the operations (comprising the at least one first operation and the at least one second operation introduced below) minimizes the total computational cost at least locally. In so doing, the multiparty computation code to be generated 140 can be executed 150 more efficiently.

As schematically illustrated as an option in **Fig. 1****,** method 100 may further comprise identifying 121 at least one second operation in the query. Furthermore, as also schematically illustrated as an option in **Fig. 1****,** method 100 may further comprise assigning 131 a second multiparty computation primitive to the at least one second operation based on the optimization 10 of the total computational cost of executing the multiparty computation code to be generated 140, wherein the second multiparty computation primitive is chosen to be either an arithmetic secret sharing primitive or a Boolean garbled circuit primitive or one of one or more further multiparty computation primitives. Here, generating 140 the multiparty computation code of the query may be further based on assigning 131 the second multiparty computation primitive. In other words, in the generated 140 multiparty computation code the at least one second operation may be implemented using the second multiparty computation primitive.

For example, the first multiparty computation primitive may be an arithmetic secret sharing primitive and the second multiparty computation primitive is a Boolean garbled circuit primitive (or vice versa). For example, the first multiparty computation primitive may be an arithmetic secret sharing primitive and the second multiparty computation primitive is a Boolean secret sharing primitive (or vice versa). For example, the first multiparty computation primitive may be a Boolean garbled circuit primitive and the second multiparty computation primitive is a Boolean secret sharing primitive (or vice versa). In any of those examples, the generated 140 multiparty computation code may be hybrid in that it is based both on e.g. an arithmetic secret sharing primitive and a Boolean garbled circuit primitive, etc..

As schematically illustrated as an option in **Fig. 2****,** the optimization 10 of the total computational cost of executing the multiparty computation code to be generated 140 may comprise estimating 11 computational costs of each of a subset of operations in the query when assigned to e.g. an arithmetic secret sharing primitive (or, in another example, a Boolean secret sharing primitive); estimating 12 computational costs of each of the subset of the operations in the query when assigned to a Boolean garbled circuit primitive; and defining 13, based on the estimated 11, 12 computational costs and/or overhead resulting from one or more conversions between arithmetic secret sharing primitives (or, in the other example, Boolean secret sharing primitives) and Boolean garbled circuit primitives, an objective function representing the total computational cost. Furthermore, as also schematically illustrated as an option in **Fig. 2****,** the optimization 10 of the total computational cost of executing the multiparty computation code to be generated 140 may comprise minimizing 14 the objective function, thereby computing individual assignments of each of the operations either to an arithmetic secret sharing primitive (or, in the other example, a Boolean secret sharing primitive) or to a Boolean garbled circuit primitive, in particular, thereby assigning 130, 131 the first multiparty computation primitive and/or the second multiparty computation primitive.

In embodiments where the first multiparty computation primitive and the second multiparty computation primitive are chosen from one or more of an arithmetic secret sharing primitive, a Boolean secret sharing primitive, a Boolean garbled circuit primitive and one or more further multiparty computation primitive, the optimization 10 of the total computational cost of executing the multiparty computation code to be generated 140 may comprise e.g. estimating 11 computational costs of each of a subset of operations in the query when assigned to an arithmetic secret sharing primitive; e.g. estimating 12 computational costs of each of the subset of the operations in the query when assigned to a Boolean garbled circuit primitive; e.g. estimating computational costs of each of the subset of the operations in the query when assigned to a Boolean secret sharing primitive; e.g. estimating computational costs of each of the subset of the operations in the query when assigned to one of the one or more further multiparty computation schemes; and defining 13, based on the estimated computational costs and/or overhead resulting from one or more conversions between arithmetic secret sharing primitives, Boolean secret sharing primitives and Boolean garbled circuit primitives and further multiparty computation primitives, an objective function representing the total computational cost. Furthermore, the optimization 10 of the total computational cost of executing the multiparty computation code to be generated may comprise minimizing 14 the objective function, thereby computing individual assignments of each of the operations either to an arithmetic secret sharing primitive or to a Boolean secret sharing primitive or to a Boolean garbled circuit primitive or to one of one or more further multiparty computation primitives, in particular, thereby assigning 130, 131 the first multiparty computation primitive and/or the second multiparty computation primitive.

In any case and advantageously, minimizing 14 the objective function may be based on an integer linear programming (ILP) solver.

Furthermore, identifying 120 the at least one first operation in the query and/or assigning 130 the first multiparty computation primitive to the at least one first operation may be based on a multiparty computation intermediate representation of the query, wherein the multiparty computation intermediate representation of the query encodes the query and comprises at least one secret share instruction and at least one result reconstruction instruction (and possibly at least one secret compute instruction). Here, and as schematically illustrated as an option in **Fig. 1****,** method 100 may comprise translating 110 the query into the multiparty computation intermediate representation of the query.

Furthermore, identifying 121 the at least one second operation in the query and/or assigning 131 the second multiparty computation primitive to the at least one second operation may be based on the multiparty computation intermediate representation of the query. The same may apply to further identifications of operations in the query and corresponding assignments to multiparty computation primitives.

The multiparty computation intermediate representation of the query may be a computation graph. Furthermore, optimization 10 of the total computational cost of executing the multiparty computation code to be generated 140 may be based on clustering subgraphs of the computation graph and applying the integer linear programming solver for each class of this clustering.

Advantageously, the multiparty computation intermediate representation may be agnostic to and/or independent of the multiparty computation framework. In other words, the multiparty computation intermediate representation may be universal and may be used for any multiparty computation framework.

Identifying 120 the at least one first operation in the query and/or assigning 130 the first multiparty computation primitive to the at least one first operation may be based on an intermediate representation of the query, wherein, for example, the intermediate representation of the query encodes the query in an optimized form. Here, and as schematically illustrated as an option in **Fig. 1****,** method 100 may comprise translating 111 the query into the intermediate representation of the query.

Furthermore, identifying 121 the at least one second operation in the query and/or assigning 131 the second multiparty computation primitive to the at least one second operation may be based on the intermediate representation of the query. The same may apply to further identifications of operations in the query and corresponding assignments to multiparty computation primitives.

Method 100 or translating 111 the query into the intermediate representation of the query may comprise parsing the query, in particular, parsing the SQL query. For example, parsing the query may comprise identifying columns to select, filter conditions, logical operators and/or grouping. Furthermore, one or more dictionaries may be used to translate string values in the database into numbers/integers because multiparty computation primitives may work more efficiently over numbers such as integers.

For example, the number of operations in the intermediate representation of the query may be smaller than the number of operations in the query. In particular, the method 100 may comprise reducing 112b the number of operations while maintaining a query objective.

Furthermore, the multiparty computation intermediate representation of the query may be based on the intermediate representation of the query. Here, and as schematically illustrated as an option in **Fig. 1****,** method 100 may comprise translating 112 the intermediate representation of the query into the multiparty computation intermediate representation of the query. The multiparty computation intermediate representation of the query may be further based on the optimization 10 of the total computational cost of executing the multiparty computation code to be generated.

As schematically illustrated as an option in **Fig. 1****,** method 100 of one of the preceding claims may comprise executing 150 the generated 140 multiparty computation code in a computation system comprising at least two computing units, thereby generating a multiparty computation result, wherein one of the at least two computing units is configured to secrete share data to another of the at least two computing units, wherein at least one computing unit is configured for result reconstruction. For example, the query may be a private set intersection between one of the at least two computing units and another of the at least two computing units. For example, the at least two computing units may be mechanically distant, in particular, wherein one of the at least two computing units is a computing unit inside of a first vehicle (see e.g. Vehicle 1 below) and another of the at least two computing units is a computing unit inside of a second vehicle (see e.g. Vehicle 2 below).

Method 100 and embodiments thereof introduce key innovations in secure SQL query processing:
- Query optimization: The SQL-IR optimizes queries to minimize the number of MPC operations (which are usually expensive).
- Data privacy: Sensitive data is securely handled using cryptographic protocols, ensuring compliance with data protection regulations.
- Cross-protocol compatibility: The SQL-IR enables queries to be securely executed across multiple MPC frameworks (e.g., MP-SPDZ, SCALE-MAMBA).
- Automation: The transformation from SQL queries to MPC protocols is automated, making secure computation accessible to developers without cryptographic expertise.
- Hybrid MPC selection: different parts of a query can automatically be assigned to the most efficient MPC primitive (e.g. the first or second multiparty computation primitive), leveraging a protocol-agnostic IR and cost-based analysis.

### Alternative Embodiments.

- The method can support additional databases by extending the data extraction and query parsing components.
- Additional MPC frameworks and protocols can be integrated by adapting the SQL-IR and MPC-IR components, ensuring flexibility across multiple applications.

Furthermore, there is disclosed a computer system configured to execute method 100 for generating a multiparty computation code of a query according to one of the preceding claims. The computer system may comprise one or more computing units (e.g. one or more CPUs) and an electronic computer memory (e.g. RAM).

Furthermore, there is disclosed a computer program configured to execute the computer-implemented method 100 for generating a multiparty computation code of a query. For example, the computer program can be in an interpretable or compiled form. It can be loaded (even in parts) for execution, e.g. as a bit or byte sequence, into the electronic computer memory (e.g. RAM) of the computer system.

Furthermore, there is disclosed a signal configured to execute the computer-implemented method 100 for generating a multiparty computation code of a query. For example, the signal may be a bit sequence or a byte sequence.

Furthermore, a computer-readable medium that stores and/or contains the computer program or the signal is disclosed. The medium may, for example, include one of RAM, ROM, EPROM, HDD, SSD, ... on which the computer program or the signal is stored.

In what follows, further embodiments of method 100 are disclosed:
In an embodiment, method 100 may be implemented as follows:
- Parsing the SQL query: Necessary data and operations from the SQL query are identified.
- Data extraction: relevant data from the SQL database is extracted. When needed, strings are converted into integers using a dynamically generated lookup table which translates the results back to their original string format after the computation.
- SQL intermediate representation (SQL-IR): The query is translated into optimized instructions for execution.
- Multiparty computation intermediate representation (MPC-IR): After SQL-IR optimization, the system converts the query into a protocol-agnostic MPC-IR, suitable for secure computation.
- Multiparty computation code generation: MPC code is generated from the MPC-IR, tailored to the chosen MPC framework.
- MPC code compilation: The generated MPC code is compiled using user-specific parameters.
- MPC code execution: The compiled code is securely executed using the selected MPC protocol, ensuring sensitive data remains private.
- Output Handling: the query results are processed and securely returned while ensuring compliance e.g. with data protection regulations.

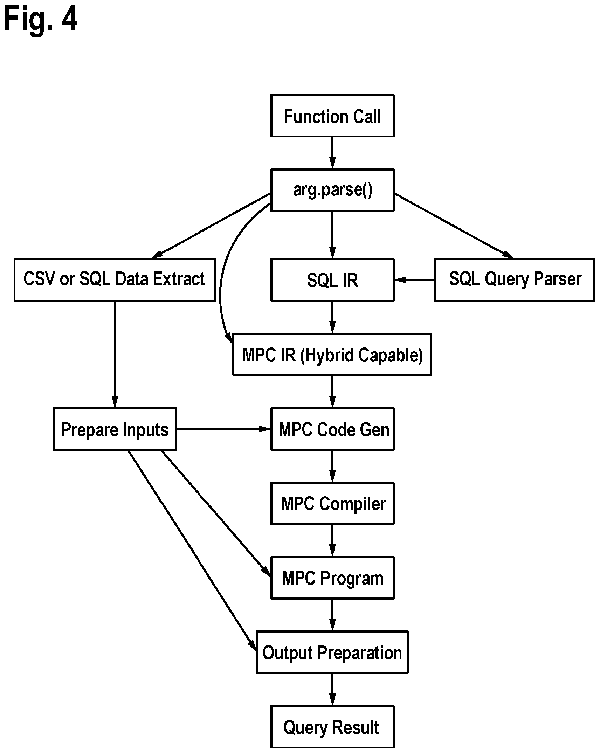

E.g. at the MPC-IR stage, a compiler can assign each (sub-)operation to an optimal MPC primitive, possibly mixing multiple protocols ("hybrid MPC") following a cost-based approach. In so doing it is ensured that always the most efficient cryptographic building block for each part of the query is used. In particular, benefits of this embodiment consist of automating and integrating the aforementioned steps, creating a streamlined and efficient solution that reduces complexity and minimizes the likelihood of errors in secure data processing. **Fig. 4** shows an example block diagram of such a workflow for secure query execution.

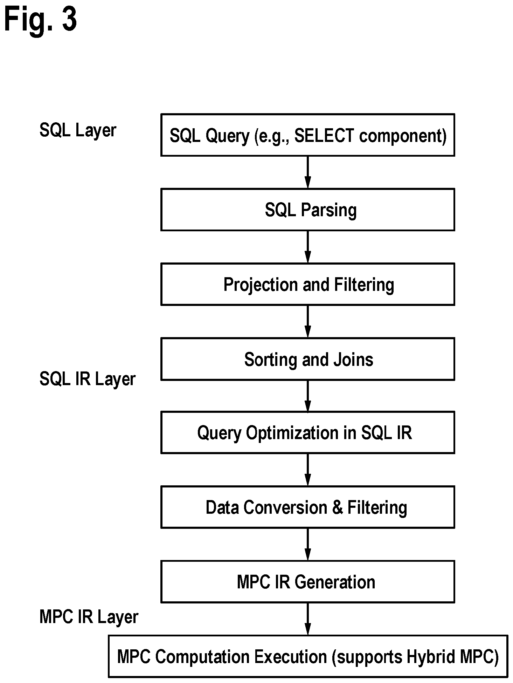

An example system architecture and workflow for MPC code generation is shown in **Fig. 3****.** In particular, a three-layer architecture may be used that facilitates secure computation and efficient data processing.
- SQL layer: This layer receives the raw SQL query from e.g. the user, handles initial parsing, and identifies the necessary operations (e.g., projection, filtering, sorting, aggregation).
- SQL intermediate representation (SQL-IR) layer: The SQL query is transformed into an intermediate representation (IR) that optimizes and prepares it for secure execution. This layer abstracts away the specifics of the SQL query from the MPC protocol.
- MPC intermediate representation (MPC-IR) layer: The optimized SQL-IR is then translated into MPC-specific operations, ensuring secure computation is performed efficiently and privately across multiple parties.

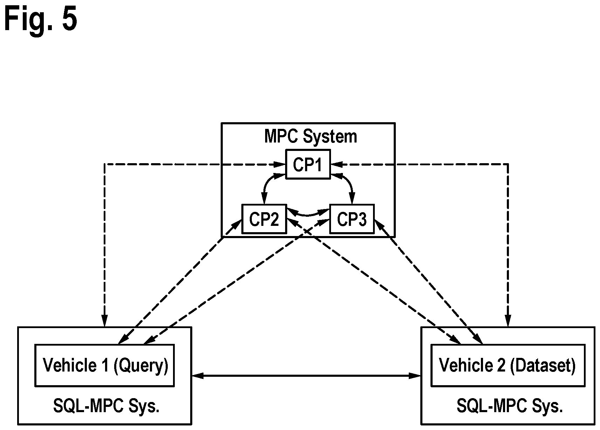

In what follows an example secure fleet management application is disclosed:
System overview and communication flow: **Fig. 5** illustrates a communication flow between two autonomous vehicles (as parties) and the MPC computing parties (CPs) performing the secure computation. This example demonstrates how SQL queries or private set intersections (PSI) can be securely processed between Vehicles 1 and 2 while keeping the query and dataset confidential. Although the example uses two parties, it can scale to any number of participants for more complex scenarios. In fact, it may apply to a fleet of vehicles. Dashed lines in **Fig. 5** represent secret-shared data transmitted to the CPs.

Consider two autonomous vehicles: Vehicle 1 submits a failure analysis query (e.g., checking for common component failures), while Vehicle 1 and Vehicle 2 hold the relevant dataset (e.g., internal data on vehicle components). Both vehicles act as input and CPs in this example, but the system is also applicable for any outsourcing scenario. This mechanism can be extended to other sectors such as healthcare, industrial analytics, etc., where secure data handling is crucial.

In this example the following SQL query may be used that Vehicle 1 (i.e. the first vehicle) submits to compare failure data with Vehicle 2's (i.e. the second vehicle's) dataset for a failure analysis:
"SELECT v1.component id
FROM vehicle components v1 JOIN vehicle components v2 ON v1.component id = v2.component id
WHERE v1.vehicle id = 'Vehicle1' AND v2.vehicle id = 'Vehicle2' AND v1.failure status = 'TRUE' AND v2.failure status = 'TRUE';"

This query efficiently identifies components with a failure status = 1 in both Vehicle 1 and Vehicle 2 by using a self-join on the vehicle components table. The query ensures that only the common components with failures in both vehicles are returned. The query must be executed securely without revealing Vehicle 2's internal data to Vehicle 1 and vice versa.

The system workflow in this example is as follows:
- Function Call and Setup: Vehicle 1 submits the query to compare failure data between the vehicles and both parties agree on the query to be computed. They also define the MPC parameters such as the protocol and framework to be used (e.g., MP-SPDZ). The dataset (from Vehicle 1 and Vehicle 2) and the query (from Vehicle 1) are passed to the SQL-MPC system running locally on both vehicles.
- Argument parsing: The system parses the inputs (query, dataset and MPC parameters) and distributes them to internal processes, as shown e.g. in Fig. 4. This includes parsing the query components such as selecting the component column, applying the WHERE clause on failure_status = TRUE, and components.
- Data extraction: Only the relevant columns (component and failure_status) are extracted from Vehicle 1's and Vehicle 2's dataset. This ensures that only the required data is used for the secure computation, minimizing unnecessary data exposure.
- Prepare inputs: If the data columns contain strings (e.g., component names), these are translated into integer values using dynamically generated dictionaries. The integer values are secret-shared and transmitted to the CPs as input data (dashed lines in **Fig. 5****).**
- SQL query parsing: The SQL query is parsed to extract the relevant columns for projection (component), as well as the condition for selection (failure_status = TRUE and v1.component_id = v2.component_id). This information is passed to the SQL-IR process for optimization.
- SQL intermediate representation (SQL-IR, i.e. the intermediate representation of the query): The parsed query is translated into an optimized SQL Intermediate Representation (SQL-IR). This optimizes the query by minimizing unnecessary operations, such as filtering the data before aggregation. The SQL-IR ensures that the query is prepared for secure computation.
- MPC intermediate representation (MPC-IR): The optimized SQL-IR is then converted into MPC-specific operations in the MPC-IR. This includes cryptographic operations like secret sharing, secure aggregation and/or result reconstruction, ensuring the query can be securely computed across multiple parties.
- Hybrid MPC decision: At this IR level, the query's operations (e.g., grouping, counting) are analyzed to see if switching to a different MPC primitive mid-query might reduce runtime. It inserts conversion operations when needed, following a partition-based or cost-based heuristic.
- MPC code generation and compilation: The MPC-IR (i.e. the multiparty computation intermediate representation of the query) and specified parameters are used to generate the MPC code, which is then compiled into an executable MPC program. The program is uploaded to the CPs.
- MPC program execution: The compiled MPC program is executed across the CPs (vehicles) with each party only holding secret shares of the data. The result (in secret shares) is computed without either party accessing the entire dataset.
- Output preparation: After the computation the secret-shared results (counts of failed components) are securely reconstructed by both vehicles. The results are translated back from their integer representation using the dictionaries generated earlier.
- Optional privacy filter: If necessary, an additional privacy filter is applied to ensure that no personally identifiable information (PII) or proprietary data is revealed. Differential Privacy can be employed to protect sensitive data in the final results.
- Query result: The final query result (list of common failed components) is displayed to the Vehicles. Both parties are assured that no sensitive information was leaked during the computation.

The following steps describe how this query is processed securely in more details:
Function call and argument parsing: Vehicle 1 inputs the SQL query, database details, the chosen MPC framework (e.g., MP-SPDZ) and/or other parameters. The query is parsed, thereby identifying the necessary components, such as:
- Columns to Select: component
- Join: component_id ON v1 == v2
- Filter Conditions: failure_status = TRUE

Data extraction: Only the relevant data from the specified SQL database (e.g., MySQL, SQLite, CSV) in Vehicle 1 and Vehicle 2 are extracted. In this example, only data from columns component and failure_status are extracted for further processing.

SQL intermediate representation (SQL-IR): The SQL query is transformed into an SQL-IR, an optimized intermediate format. The SQL-IR ensures that the query is efficient for secure computation by applying techniques such as filtering data before sorting or aggregation, thereby minimizing unnecessary computations.

```
 SQL-IR generation:
 ir = SQLIntermediateRepresentation0
 // Set table name
 ir.set_table_name("vehicle_id")
  
 // Add columns to select
 ir.add_select_column("component")
  
 // Add join
 ir.addJoin_condition("left_table": "v1", "left_column": "component_id",
    "right_table": "v2", "right_column": "component_id")
  
    // Add filtering conditions
 ir.add_where_condition("v1.vehicle_id", "=", "Vehicle1")
 ir.add_where_condition("v2.vehicle_id", "=", "Vehicle2")
 ir.add_where_condition("v1.failure_status", "=", 'TRUE')
 ir.add_where_condition("v2.failure_status", "=", 'TRUE')
 ir.add_logical_operator("AND", '''AND'', '"AND")
```

The SQL IR layer may also perform:
- Query optimization: Filters and optimizes query execution to reduce the number of MPC operations. Since the Vehicles can locally check the failure status of their components, only the components with failure are inputted to the computation, which will increase efficiency by reducing the number of MPC operations.
- Data conversion: Converts non-numeric values into integers or fixed point numbers.
- Preparation for MPC: Prepares the query and data for secure processing in the MPC IR layer.

MPC intermediate representation (MPC-IR): The (optimized) SQL-IR is translated into the MPC-IR, defining cryptographic operations such as secret sharing, secure computations and/or result reconstruction.

```
 MPC-IR Generation:
 // Add MPC operations
 ir.add_mpc_operation("secret_share", ["component"])
 ir.add_mpc_operation("secure_computation", {"operation": "comparison",
 ['v1.component'], "==" ["v2.component"]})
 ir.add_mpc_operation("result_reconstruction", {"columns": ['component']})
```

Input preparation for MPC: Input data is prepared by converting string values (e.g., component = 'J772__Rearview 0050') into integers using dynamically generated dictionaries (e.g., mapping component J772__Rearview 0050 = 112). These inputs are secret-shared for secure computation.

MPC code generation and compilation: The SQL-IR is translated into MPC code. The code is compiled using MPC-specific compilers for the chosen MPC framework and protocol (e.g., MP-SPDZ). If certain (sub-)operations (e.g., the filter or group operation) can benefit from a different cryptographic primitive, additional conversion steps are generated so that the final compiled code effectively uses multiple protocols.

MPC Program Execution: The compiled MPC program is executed securely within the chosen MPC framework. Operations are performed across distributed parties, thereby ensuring no single party has access to the complete dataset.

```
 MP-SPDZ Execution Example:
 // Initialize data structure for projection
 COLS = 1 // Components
 ROWSv1 = 411 // Number of components with failure of Vehicle 1
 ROWSv2 = 347 // Number of components with failure of Vehicle 2
 data_v1 = sint.Tensor([ROWSv1, COLS])
 data_v2 = sint.Tensor([ROWSv2, COLS])
 result = sint.Tensor([ROWSv1, ROWSv2])
 print_In("Reading Inputs")
 @for_range_opt(ROWSv1)
 def _(i):
 data_v1[i][0] = sint.get_input_from(0) // Secret shared components Vehicle 1
  
 @for_range_opt(ROWSv2)
 def _(i):
 data_v2[i][0] = sint.get_input_from(1) // Secret shared components Vehicle 2
  
 print_In("Start'selection")
 @for_range_opt (ROWSv1)
 def _(i):
  
  @for_range_opt(ROWSv2)
 def _(j):
        is_equal = data_v1[i][0] == data_v2[j][0]
        result[i][j] = data_v1[i][0] * is_equal
 // Note that the Components in the result are represented as integer values here.
 These // will be translated back into strings by the following Output Preparation
 Module
```

Output preparation and result reconstruction: After secure computation, the query results are reconstructed (e.g., component) and conversion of the numeric representations (integer, fix-point, etc.) back into string format using stored dictionaries take place. The results are then securely returned to the user.

Optional output privacy filter: An additional privacy filter can be applied to ensure no personally identifiable information (PII) or sensitive data is exposed. Techniques like Differential Privacy can be added to further protect the output.

Final query result: The final result is displayed to Vehicle 1 and Vehicle 2, ensuring compliance e.g. with privacy regulations and/or protecting intellectual property throughout the process. Importantly, protecting the technical integrity of Vehicle 1 and Vehicle 2, hence, the fleet.

Final reconstructed output example (component with common failure):
- ABS, ESP9 Premium H17 0870
- Cam, J772__Rearview 0050
- Engine, V6 3.0I TFSI H11 0002

While this example is simple, method 100 is designed to handle data from large fleets, supporting scalability in real-world automotive applications.

While demonstrated in the automotive industry, method 100 can be adapted for healthcare, finance and/or other sectors requiring secure data processing. In particular, method 100 allows to handle complex SQL queries securely and efficiently in a real-world scenario. For example, in healthcare, multiple hospitals could collaborate on patient data analysis (e.g., predicting disease outbreaks) without sharing sensitive patient information. In another example, in banking, financial institutions can run secure queries across branches to detect potential fraud, while preserving customer privacy. Furthermore, in oil & gas industry, companies can securely analyze operational data from multiple drilling sites to optimize production without revealing proprietary operational details.

Furthermore, in insurance, organizations can calculate risk models across distributed datasets while ensuring regulatory compliance with data privacy laws. The modular design of method 100 allows for seamless integration with different MPC frameworks, making it adaptable to any application where secure, privacy-preserving data analysis is needed.

In fact, method 100 is versatile and applicable across a wide range of domains where secure data analytics is required. Below are some applications and use cases in various industries:
- Automotive: Supporting secure, data-driven analytics in autonomous vehicles. For example, two autonomous vehicles can perform secure Private Set Intersection (PSI) or failure analysis queries on internal vehicle data without revealing proprietary or sensitive details about the vehicles' systems.
- Healthcare: Performing secure, privacy-preserving analytics on patient health records for diagnostics and research while maintaining compliance with health data regulations.
- Finance: Analyzing sensitive financial data across multiple institutions without exposing confidential customer details, supporting fraud detection and risk management.
- Industry: Facilitating secure and confidential performance analytics in manufacturing and logistics by enabling collaborative data analysis across global supply chains without risking exposure of proprietary data.

In what follows example multiparty computation (MPC) primitives are explained, highlighting the main categories (Arithmetic Secret Sharing, Boolean Secret Sharing, and Yao's Garbled Circuits), their key operations, reconstruction methods and cross-protocol conversions frequently used in hybrid or mixed-protocol systems.

### Core MPC primitives:

### Secret sharing:

- Arithmetic Secret Sharing: A value *x* from a finite field F (or ring $ℤ / {2}^{k} ℤ$) is split into *n* shares (*x*₁, *x*₂, ..., *xₙ*) such that $x ≡ {x}_{1} + {x}_{2} + ⋯ + {x}_{n} \left(mod\right)$ with no smaller subset of parties learning *x.* Provided the threshold *t* < *n* is satisfied, shares can be recombined to recover x.
- Boolean Secret Sharing: Here, a bitstring *x* ∈ {0, 1}*^{k}* is split into shares (*x*₁, *x*₂, ..., *xₙ*) such that $x ≡ {x}_{1} ⊕ {x}_{2} ⊕ … ⊕ {x}_{n} \left(mod\right)$ where ⊕ denotes bitweise XOR. Local XOR of the shares corresponds to bitwise addition of the secret in the Boolean domain.
- Yao's Garbled Circuits (GC): In the garbled-circuit paradigm, one party (the so-called Garbler) assigns random labels to each wire of a Boolean circuit, representing 0 or 1. Another party (the so-called Evaluator) obtains those labels that match its input bits (via oblivious transfer). By evaluating the garbled gates, the Evaluator learns the final output labels but not intermediate values. This approach can be used by itself or in conjunction with other sharing methods.

### Linear operations:

- Addition and substraction (arithmetic): For arithmetic shares < *a* >*^{A}* and *< b* >*^{A}*, addition is local: ${\left〈a+b\right〉}^{A} = {\left〈a\right〉}^{A} + {\left〈b\right〉}^{A}$ where each party simply adds its own shares. Subtraction works similarly.
- Scalar multiplication (arithmetic): If c is a public constant, then ${\left〈c⋅a\right〉}^{A} = c ⋅ {\left〈a\right〉}^{A}$ Is computed locally, without further interaction.
- XOR (Boolean): Given < *a* >*^{B}* and < *b* >*^{B}*, each party's local XOR of the bitwise shares yields < *a* ⊕ *b* >*^{B}.*

### Non-linear operations:

- Secure multiplication (arithmetic): To multiply < *a* >*^{A}* by < *b* >*^{A}*, parties typically invoke an interactive protocol (e.g., Beaver triples). The outcome is a new arithmetic share < *ab* >*^{A}.*
- Bitwise AND (Boolean): For Boolean shares < *a* >*^{B}* and < *b* >*^{B}*, the parties run a small interactive step (often using preprocessed material) to compute *< a* ∧ *b* >*^{B}.*
- Yao gates: Within the Yao framework, any Boolean gate (AND, OR, XOR, etc.) can be evaluated in a garbled circuit, keeping intermediate signals hidden from the Evaluator.

### Reconstruction protocols:

- Arithmetic reconstruction: To reveal < *x* >*^{A}*, each party sends its share *xᵢ* to a reconstructor. Summing these shares modulo the field recovers x. Often, all parties learn the result.
- Boolean reconstruction: For < *x* >*^{B}*, each party sends *xᵢ*, and the XOR of all shares yields x.
- Yao output decoding: After evaluating a garbled circuit, the Evaluator holds output labels which map to clear bits via a lookup table provided by the Garbler.

### Mixed-protocol conversions:

Certain SQL or analytic operations may be more efficient in one sharing domain than another; hybrid protocols require conversions between domains:
- A2B / B2A: Convert arithmetic shares to Boolean shares (or vice versa)
- A2Y / Y2A: Convert arithmetic shares to garbled-circuit form (or vice versa)
- B2Y / Y2B: Convert Boolean shares to garbled-circuit form (or vice versa)

### Relationship among MPC primitives:

| MPC primitive | Functionality / conversions |
|---|---|
| Arithmetic sharing (< *x* >*^{A}*) | - Local addition, scalar multiplication |
| | - Secure multiplication (interactive) |
| | - Converts: *< x* >*^{A}* ↔ < *x* >*^{B}* (A2B / B2A), *< x* >*^{A}* ↔ < *x* >*^{Y}* (A2Y / Y2A) |
| Boolean sharing (< *x* >*^{B}*) | - Local XOR for addition in Boolean domain |
| | - Secure AND (interactive) |
| | - Commonly used for comparisons/equality tests |
| | - Converts: *< x* >*^{B}* ↔ *< x* >*^{A}*, < *x* >*^{B}* ↔ < *x* >*^{Y}* |
| Yao GC (< *x* >*^{Y}*) | - Handles generic Boolean circuits (AND, OR, XOR) |
| | - Particularly effective for conditionals |
| | - Converts: < *x* >*^{Y}* ↔ < *x* >*^{A}*, *< x* >*^{Y}* ↔ *< x* >*^{B}* |

By leveraging these MPC primitives - arithmetic, Boolean and garbled-circuit - along with their linear/non-linear operations, reconstruction protocols, and cross-protocol conversions, one can implement secure versions of e.g. typical SQL operations (e.g., filtering, grouping, aggregation, sorting). This supports flexible and privacy-preserving data analytics across distributed parties.

## Claims

1. Computer-implemented method (100) for generating a multiparty computation code of a query, comprising:
- identifying (120) at least one first operation in the query;
- assigning (130) a first multiparty computation primitive to the at least one first operation based on an optimization (10) of a total computational cost of executing the multiparty computation code to be generated (140), wherein the first multiparty computation primitive is chosen to be either an arithmetic secret sharing primitive or a Boolean secret sharing primitive or a Boolean garbled circuit primitive or one of one or more further multiparty computation primitives;
- generating (140), using a multiparty computation framework, the multiparty computation code of the query based on assigning (130) the first multiparty computation primitive.

2. The method (100) of claim 1, further comprising:
- identifying (121) at least one second operation in the query;
- assigning (131) a second multiparty computation primitive to the at least one second operation based on the optimization (10) of the total computational cost of executing the multiparty computation code to be generated (140), wherein the second multiparty computation primitive is chosen to be either an arithmetic secret sharing primitive or a Boolean secret sharing primitive or a Boolean garbled circuit primitive or one of one or more further multiparty computation primitives;
wherein generating (140) the multiparty computation code of the query is further based on assigning (131) the second multiparty computation primitive.

3. The method (100) of claim 2, wherein the first multiparty computation primitive is an arithmetic secret sharing primitive and the second multiparty computation primitive is a Boolean garbled circuit primitive.

4. The method (100) of one of the preceding claims, wherein the optimization (10) of the total computational cost of executing the multiparty computation code to be generated (140) comprises:
- estimating (11) computational costs of each of a subset of operations in the query when assigned to an arithmetic secret sharing primitive;
- estimating (12) computational costs of each of the subset of the operations in the query when assigned to a Boolean garbled circuit primitive;
- defining (13), based on the estimated (11, 12) computational costs and/or overhead resulting from one or more conversions between arithmetic secret sharing primitives and Boolean garbled circuit primitives, an objective function representing the total computational cost;
- minimizing (14) the objective function, thereby computing individual assignments of each of the operations either to an arithmetic secret sharing primitive or to a Boolean garbled circuit primitive, in particular, thereby assigning (130, 131) the first multiparty computation primitive and/or the second multiparty computation primitive.

5. The method (100) of claim 4, wherein minimizing (14) the objective function is based on an integer linear programming solver.

6. The method (100) of claim 1, wherein the query is a database query and, in particular, an SQL query.

7. The method (100) of one of the preceding claims, wherein identifying (120) the at least one first operation in the query and/or assigning (130) the first multiparty computation primitive to the at least one first operation are based on a multiparty computation intermediate representation of the query, wherein the multiparty computation intermediate representation of the query encodes the query and comprises at least one secret share instruction and at least one result reconstruction instruction;
optionally, the method (100) comprising:
- translating (110) the query into the multiparty computation intermediate representation of the query.

8. The method (100) of claim 7, wherein the multiparty computation intermediate representation of the query is a computation graph.

9. The method (100) of claim 8, when dependent on claim 5, wherein the optimization (10) of the total computational cost of executing the multiparty computation code to be generated (140) is based on clustering subgraphs of the computation graph and applying the integer linear programming solver for each class of this clustering.

10. The method (100) of any of the claims 7 to 9, wherein the multiparty computation intermediate representation is agnostic to and/or independent of the multiparty computation framework.

11. The method (100) of one of the preceding claims, wherein identifying (120) the at least one first operation in the query and/or assigning (130) the first multiparty computation primitive to the at least one first operation are based on an intermediate representation of the query, wherein the intermediate representation of the query encodes the query in an optimized form; optionally, the method (100) comprising:
- translating (111) the query into the intermediate representation of the query.

12. The method (100) of claim 5 or 6, when dependent on one of the claims 7 to 10, wherein the multiparty computation intermediate representation of the query is based on the intermediate representation of the query;
optionally, the method (100) comprising:
- translating (112) the intermediate representation of the query into the multiparty computation intermediate representation of the query.

13. The method (100) of claim 12, wherein the multiparty computation intermediate representation of the query is further based on the optimization (10) of the total computational cost of executing the multiparty computation code to be generated (140).

14. The method (100) of one of the preceding claims, comprising:
- executing (150) the generated (140) multiparty computation code in a computation system comprising at least two computing units, thereby generating a multiparty computation result, wherein one of the at least two computing units is configured to secrete share data to another of the at least two computing units, wherein at least one computing unit is configured for result reconstruction.

15. The method (100) of claim 14, wherein the at least two computing units are mechanically distant, in particular, wherein one of the at least two computing units is a computing unit inside of a first vehicle and another of the at least two computing units is a computing unit inside of a second vehicle.
